# EUROPÄISCHE PATENTSCHRIFT

(11) **EP 2 111 419 B1**
(45) Veröffentlichungstag und Bekanntmachung des Hinweises auf die Patenterteilung: **23.03.2011**
(21) Anmeldenummer: 07847734.6
(22) Anmeldetag: 04.12.2007
(51) Int. Cl.: C08F 2/38, C08F 2/22, C08F 2/14

(54) **RADIKALISCHES POLYMERISATIONSVERFAHREN**
FREE-RADICAL POLYMERIZATION PROCESS
PROCÉDÉ DE POLYMÉRISATION RADICALAIRE

(30) Priorität: 11.12.2006 DE 102006058203
(43) Veröffentlichungstag der Anmeldung: 28.10.2009
(73) Patentinhaber: Wacker Chemie AG, 81737 München (DE)
(72) Erfinder: MINGE, Oliver, 80337 München (DE); BALL, Peter, 84547 Emmerting (DE); BORTENSCHLAGER, Martin, 85232 Bergkirchen (DE)
(74) Vertreter: Schuderer, Michael
(86) Internationale Anmeldenummer: PCT/EP2007/063227
(87) Internationale Veröffentlichungsnummer: WO 2008/071589

(56) Entgegenhaltungen:
- EP-A- 0 970 973
- WO-A-01/42311
- DE-A1- 19 929 395

## Beschreibung

Die Erfindung betrifft ein radikalisches Polymerisationsverfahren in disperser Phase, insbesondere ein Miniemulsionspolymerisationsverfahren, bei dem die Polymerisation in der kontinuierlichen Phase verhindert wird.

Heterophasenpolymerisationstechniken sind seit langem bekannt und werden seit vielen Jahrzehnten in industriellem Maßstab ausgeführt. Beispiele für solche Heterophasentechniken sind die dem Fachmann geläufigen Polymerisationsverfahren der Suspensionspolymerisation, der Mikrosuspensionspolymerisation, der Emulsionspolymerisation und der Miniemulsionspolymerisation, wie sie beispielsweise in Peter A. Lovell, M.S. El-Aasser, "Emulsion Polymerization and Emulsion Polymers" 1997, John Wiley and Sons, Chichester beschrieben werden. Die mittels dieser Verfahren erhaltenen polymeren Produkte finden Einsatz in Kosmetika, Waschmitteln, Klebstoffen, Farben und Lacken, Baustoffen und in der Papierindustrie, um nur einige Anwendungen zu nennen. Mittlerweile werden mehr als 10 Millionen Tonnnen Polymer pro Jahr durch Heterophasentechniken produziert (vgl. M. Antonietti, K. Tauer, Macromol. Chem. Phys. 2003, 204, 2, 207-219)_{.}

Die Vorteile von Heterophasenpolymerisationen gegenüber einphasigen Polymerisationen, wie sie zum Beispiel die Substanz- oder Lösungspolymerisation darstellen, sind die effektivere Wärmeabfuhr, verbunden mit einer geringeren Viskosität, was zu besserer Durchmischung und einer erheblich reduzierten Gefahr von Wärmeexplosionen führt. Zusätzlich ist bei Heterophasenpolymerisationen eine Phase oftmals Wasser und auf organische Lösemittel kann in der Regel verzichtet werden, so dass Heterophasentechniken auch aus ökologischen Gesichtspunkten große Vorteile aufweisen. Die Produkte liegen dabei in aller Regel in partikulärer Form vor, was für eine spätere Verwendung oftmals von großem Vorteil ist. Auch finden die auf diese Weise erhaltenen mehrphasigen Produkte oftmals direkt ohne weitere Verarbeitungsschritte Anwendung, beispielsweise als Bindemittel von Farben oder als Klebstoffkomponente. Es ist also oftmals vorteilhaft eine Polymerisation in heterogener Phase auszuführen.

Heterophasenpolymerisationstechniken sind in vieler Hinsicht komplexer als homogene Polymerisationen. Eine wesentliche Ursache für diese Komplexität ist die unterschiedliche Löslichkeit der zu polymerisierenden Bausteine in den verschiedenen Phasen, was dazu führt, dass sich Verteilungsgleichgewichte der Bausteine in den Phasen einstellen und diese Bausteine in den verschiedenen Phasen in unterschiedlichen Konzentrationen vorliegen. Auch polymerisieren diese Bausteine in den verschiedenen Phasen unterschiedlich schnell und nach anderen Kinetiken, was dazu führt, dass während der Polymerisation Transportprozesse der Bausteine zwischen den Phasen stattfinden, welche starken Einfluss auf die Natur des Endproduktes haben.

So besteht die Ausgangsemulsion bei einer Emulsionspolymerisation typischerweise aus dispergierten, mikrometergroßen Monomertropfen in einer wässrigen kontinuierlichen Phase, welche nach Zugabe wasserlöslicher Initiatoren im Lauf der Reaktion durch Phasenübergang in und Transportprozesse durch die Wasserphase abgebaut werden, so daß als Produkt eine zweite Phase aus erheblich kleineren Polymerpartikeln entsteht, der sogenannte Latex. Oftmals ist es jedoch gewünscht, die zu Beginn eingestellt Partikelgrößenverteilung zu erhalten und durch Polymerisation lediglich zu fixieren.

Eine Möglichkeit dieses Verhalten zu verhindern ist der Einsatz öllöslicher Initiatoren, so daß die Polymerisation im Wesentlichen in der dispersen Phase abläuft. Bei dem dann vorliegenden Fall der Suspensionspolymerisation oder Mikrosuspensionspolymerisation sieht man aufgrund der Wasserlöslichkeit vieler Monomere jedoch oftmals auch einen Phasentransport, der zu einer Partikelnukleierung in der kontinuiertlichen Wasserphase auf Kosten der ursprünglichen Partikel führt. Oft ist zudem der Einsatz wasserlöslicher Initiatoren erwünscht, da diese eine einfachere Dosierung sowie eine größere Vielfalt, was Initiatorzerfallskinetiken betrifft, erlauben.

Eine Möglichkeit dieses Phänomen des stattfindenden Phasentransportes zu unterbinden ist das Verfahren der Miniemulsionspolymerisation. Hier wird durch Zugabe eines Hydrophobs eine osmotische Barriere aufgebaut, welche idealerweise einen Phasentransport und damit einen Abbau der Monomertropfen verhindert. Die ursprünglich in der Emulsion vorhandene Zahl und Größenverteilung der Partikel wird dabei idealerweise fixiert und in polymere Partikel überführt. Trotzdem finden auch hier unerwünschte Polymerisationsprozesse in der Wasserphase statt, insbesondere dann, wenn es sich bei den zu polymerisierenden Monomeren um solche handelt, welche eine vergleichsweise große Löslichkeit in der kontinuierlichen Phase haben.

Aufgabe der vorliegenden Erfindung war es daher, ein Verfahren zu entwickeln, welches es in radikalischen Polymerisationsprozessen in heterogener Phase erlaubt, den Ort der Polymerisation im Wesentlichen auf die disperse Phase zu beschränken und/oder die Nukleierung von Partikeln in der kontinuierlichen Phase weitgehend zurückzudrängen.

Diese Aufgabe wurde dadurch gelöst, dass zu der Polymerisationsrezeptur Verbindungen zugesetzt werden, welche im Wesentlichen nur in der kontinuierlichen Phase löslich sind und welche aufgrund ihrer Reaktivität gegenüber Radikalspezies das Kettenwachstum in dieser Phase derart beeinflussen, dass die Polymerisation im Wesentlichen nur in den dispersen Phasen stattfindet.

Gegenstand der Erfindung ist daher ein Verfahren zur radikalisch initiierten Heterophasenpolymerisation, wobei die Polymerisation von einem oder mehreren ethylenisch ungesättigten Monomeren, ausgewählt aus der Gruppe enthaltend Vinylester von unverzweigten oder verzweigten Alkylcarbonsäuren mit 1 bis 15 C-Atomen, in einer, in der kontinuierlichen Phase, dispergierten Phase abläuft, dadurch gekennzeichnet, dass vor oder während der Polymerisation ein oder mehrere in der kontinuierlichen Phase lösliche und in der dispergierten Phase unlösliche Additive zugegeben werden, welche die Polymerisation der ethylenisch ungesättigten Monomere in der kontinuierlichen Phase abbrechen,
wobei als Additive solche zugegeben werden aus der Gruppe umfassend Styrylgruppen-tragende polare oder salzartige Verbindungen, welche eine mit den Monomeren der dispersen Phase ungünstige Copolymerisationscharakteristik aufweisen.

Die bei der Polymerisation erhaltenen Polymere und die zur Polymerisation eingesetzten Monomere stellen die dispergierte (disperse) Phase(n) dar. Zur Polymerisation geeignete ethylenisch ungesättigte Monomere sind ein oder mehrere Monomere aus der Gruppe enthaltend Vinylester von unverzweigten oder verzweigten Alkylcarbonsäuren mit 1 bis 15 C-Atomen, Methacrylsäureester und Acrylsäureester von unverzweigten oder verzweigten Alkoholen mit 1 bis 15 C-Atomen, Vinylaromaten, Olefine, Diene oder Vinylhalogenide, sowie gegebenenfalls weitere damit copolymerisierbare Hilfsmonomere oder Makromonomere.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9® oder VeoVa10® (Handelsnamen der Firma Resolution). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Als Vinylaromaten bevorzugt sind Styrol, alpha-Methylstyrol, die isomeren Vinyltoluole und Vinylxylole sowie Divinylbenzole. Besonders bevorzugt ist Styrol.

Unter den Vinylhalogenverbindungen sind Vinylchlorid, Vinylidenchlorid, ferner Tetrafluorethylen, Difluorethylen, Hexylperfluorethylen, 3,3,3-Trifluorpropen, Perfluorpropylvinylether, Hexafluorpropylen, Chlortrifluorethylen und Vinylfluorid zu nennen. Besonders bevorzugt ist Vinylchlorid.

Die bevorzugten Olefine sind Ethen, Propen, 1-Alkylethene sowie mehrfach ungesättigte Alkene, und die bevorzugten Diene sind 1,3-Butadien und Isopren. Besonders bevorzugt sind Ethen und 1, 3-Butadien.

Bevorzugte Makromonomere sind einfach oder mehrfach ethylenisch ungesättigte Moleküle mit zahlenmittleren Molmassen > 400 g/mol, bevorzugt > 1000 g/mol. Als ethylenisch ungesättigte Reste der Makromonomere kommen Vinyl-, (Meth) acryl-, Allyl-, Styryl-, Norbornyl- und Maleatreste in Betracht. Die Makromonomere können linear- oder verzweigt sein, bevorzugt sind jedoch lineare Makromonomere. Das Gerüst der Makromonomere kann aus Poly(dialkylsiloxan)en, Poly(diarylsiloxan)en, Poly(alkylarylsiloxan)en, Poly(ethylenoxid)en, Poly(propylenoxid)en, Poly-(ethylenoxid-co-propylenoxid)en, Poly(esterpolyol)en, Poly-(amid)e, Poly(ester)n, Poly((meth)acrylat)en, Poly(acrylamid)en und Poly(vinylester)n bestehen.

Bevorzugt handelt es sich bei den Makromeren um Polysiloxanbausteine. Besonders bevorzugte Silikonmakromere sind Silikone mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, wobei mindestens ein a = 1 ist, und n = 5 bis 10000 beträgt.

In der allgemeinen Formel R¹ₐR₃₋ₐSiO (SiR₂O) ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylenoder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbaren Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, (Meth)Acryloxymethyl- und 3-Acryloxypropyl-Gruppe.

Am meisten bevorzugt werden α,ω-Divinyl-Polydimethylsiloxane, α,ω-Di-(3-acryloxypropyl)-Polydimethylsiloxane, a,w-Di-(3-methacryloxypropyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(methacryloxymethyl)-Polydimethylsiloxane, α-Mono-(3-methacryloxypropyl)-Polydimethylsiloxane besonders bevorzugt. Bei den monofunktionellen Polydimethylsiloxanen befindet sich am anderen Kettenende ein Alkyl- oder Alkoxyrest, beispielsweise ein Methyl- oder Butylrest.

Gegebenenfalls können noch 0,1 bis 20 Gew.-%, bezogen auf das Gesamtgewicht der Monomere, Hilfsmonomere copolymerisiert werden. Bevorzugt werden 0,5 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, Hexandioldiacrylat oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignete Hilfsmonomere sind auch epoxidfunktionelle Comonomere wie Glycidylmethacrylat und Glycidylacrylat. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weiter besonders bevorzugte Hilfsmonomere sind ethylenisch ungesättigte Silane der allgemeinen Formel (R⁵)₄₋ₘ-Si-(OR⁶)ₘ, wobei m eine Zahl im Wert von 1, 2, oder 3 bedeutet, R⁵ ein organofunktioneller Rest ist, ausgewählt aus der Gruppe Methacryloyloxyrest, Acryloyloxyrest, Vinylrest, Allylrest, Mercaptorest, wobei der Rest R⁵ unmittelbar am Siliciumatom gebunden sein kann oder durch eine Kohlenstoffkette von 1 bis 6 C-Atomen, welche unterbrochen sein kann durch Sauerstoff -O-, Schwefel -S- oder Amin -NR⁶-, davon getrennt sein kann und R⁶ einen einwertigen linearen oder verzweigten aliphatischen oder cycloaliphatischen Kohlenwasserstoffrest oder einen einwertigen aromatischen Kohlenwasserstoffrest oder einen Rest -C(=O)-R⁷ bedeutet, wobei R⁷ einen einwertigen linearen oder verzweigten aliphatischen oder einen cycloaliphatischen Kohlenwasserstoffrest oder einen einwertigen aromatischen Kohlenwasserstoffrest bedeutet. Das ausgewählte Silan oder gegebenenfalls die ausgewählten Silane können in nicht hydrolysierter Form, in hydrolysierter Form oder in hydrolysierter und teilkondensierter oder hydrolysierter und kondensierter Form oder in einem Gemisch dieser Formen vorliegen.

Besonders bevorzugte Kombinationen der oben aufgeführten Monomere sind ein oder mehrere Monomere aus der Gruppe Vinylacetat und/oder Vinylester von α-verzweigten Monocarbonsäuren mit 9 bis 11 C-Atomen mit Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien.

Besonders bevorzugt werden als Monomere auch Gemische von Vinylacetat und Ethylen; Gemische von Vinylacetat, Ethylen und einem Vinylester von α-verzweigten Monocarbonsäuren mit 9 bis 11 C-Atomen;

Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen;
wobei die genannten Gemische gegebenenfalls noch ein oder mehrere der obengenannten Hilfsmonomere oder Makromere enthalten können.

Die Monomerauswahl bzw. die Auswahl der Gewichtsanteile der Comonomere erfolgt dabei so, daß im allgemeinen eine Glasübergangstemperatur Tg von ≤ 110°C, vorzugsweise -50°C bis +60°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956*)* gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975*)* aufgeführt.

Die kontinuierliche Phase liegt bei Prozessbedingungen in flüssigem Aggregatzustand vor. Die kontinuierliche Phase wird so ausgewählt, dass sie mit der dispersen Phase, das heißt den Monomeren und den bei der Polymerisation gebildeten Polymeren unter den Prozessbedingungen nicht mischbar ist. Vorzugsweise sollen die bei der Polymerisation eingesetzten Monomere und die dabei gebildeten Polymere unter den Polymerisationsbedingungen zu maximal 1 Gew.-%, vorzugsweise zu maximal 0,1 Gew.-%, jeweils bezogen auf das Gesamtgewicht aus Monomeren und Polymer, in der kontinuierlichen Phase löslich sein. Falls Hilfsmonomere copolymerisiert werden, wird deren Anteil so gewählt, dass die obengenannten Werte nicht überschritten werden.

Die kontinuierliche Phase kann aus einer Substanz oder aus einem Gemisch von Substanzen bestehen. Die kontinuierliche Phase hat im Allgemeinen bei 1 bar Druck einen Schmelzpunkt von ≥ - 130°C und einen Siedepunkt ≤ 250°C, bevorzugt einen Schmelzpunkt ≥ -100°C und einen Siedepunkt ≤ 150°C, am meisten bevorzugt ist ein Schmelzpunkt > -20°C und ein Siedepunkt ≤ 110°C.

Je nach Auswahl der Monomere eignen sich als kontinuierliche Phase Wasser, Alkohole, Ether, Aldehyde, Ketone, aromatische Kohlenwasserstoffe, aliphatische Kohlenwasserstoffe, teil- oder perfluorierte Kohlenwasserstoffe, Ester und Amide, ebenso wie überkritische Medien, beispielsweise Kohlendioxid oder Ammoniak. Auch ionische Flüssigkeiten wie N-Butylimidazolium-hexafluoro-Phosphat sind geeignet. Ebenfalls geeignet sind Mischungen dieser Substanzklassen. Besonders geeignet sind Wasser, sowie aliphatische und aromatische Alkohole, insbesondere Methanol, Ethanol und Isopropanol und Toluol, sowie Gemische der genannten Substanzklassen und Substanzen.

Zur Erzeugung der dispersen Phase in der kontinuierlichen Phase werden in der Regel ein oder mehrere Dispergiermittel eingesetzt. Als Dispergiermittel können alle üblicherweise verwendeten Emulgatoren und/oder Schutzkolloide eingesetzt werden. Geeignete Schutzkolloide sind beispielsweise teilverseifte Polyvinylalkohole, Polyvinylpyrrolidone, Polyvinylacetale sowie Stärken und Cellulosen und deren Carboxymethyl-, Methyl-, Hydroxyethyl-, Hydroxypropyl-Derivate. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten. Weitere verwendbare Emulgatoren und Schutzkolloide finden sich in "McCutchen's Detergents and Emulsifiers", North American Edition, 1979. Die Schutzkolloide und/oder Emulgatoren werden im allgemeinen in einer Menge von insgesamt 1 bis 20 Gew.-%, bezogen auf das Gesamtgewicht der Monomere bei der Polymerisation zugesetzt.

Zur Dispergierung der dispersen Phase in der kontinuierlichen Phase werden je nach Art der Heterophasenpolymerisation Standardmethoden angewandt. Zu ihnen zählen Rühren mittels Rührwerken, Homogenisieren mittels Rotor-Stator-Geräten (z.B. Ultra-Turrax®), Homogenisieren mittels Speed-Mixern, Dissolvern, Hochdruckhomogenisatoren oder Ultraschallgeräten.

Das Gewichtsverhältnis zwischen kontinuierlicher Phase und disperser Phase nimmt im Allgemeinen Werte von 90 : 10 bis 30 : 70 an. Bevorzugt beträgt das Verhältnis von 80 : 20 bis 40 : 60. Besonders bevorzugt ist ein Verhältnis von 70 : 30 bis 45 : 55.

Die Heterophasenpolymerisation kann mittels der bekannten Techniken der Suspensions-, Mikrosuspensions-, Emulsions- oder Miniemulsionspolymerisation erfolgen. In einer besonders bevorzugten Form wird die Reaktion nach der Methodik der Miniemulsionspolymerisation in Wasser durchgeführt (vgl. z.B. K. Landfester, "Polyreactions in Miniemulsions", Macromol. Rapid. Commun. 2001, 22, 896-936 und M.S. El-Aasser, E.D. Sudol, "Miniemulsions: Overview of Research and Applications" 2004, JCT Research, 1, 20-31).

Soll die Reaktion nach dem Verfahren der Miniemulsionspolymerisation in Wasser ausgeführt werden, können zu den oben angeführten Komponenten gegebenenfalls noch hydrophobe, nicht polymerisierbare Zusätze in Mengen von 0,1 bis 3 Gew-%, bezogen auf disperse Phase, zugegeben werden, welche Diffusionsprozesse (Ostwald-Reifung) verhindern. Hydrophob bedeutet dabei, dass der jeweilige Zusatz unter Normalbedingungen eine Löslichkeit von ≤ 10⁻⁶ g/l in Wasser aufweist. Beispiele für diese Zusätze sind hydrophobe Substanzen wie Hexadekan, Cetylalkohol, oligomere Cyclosiloxane, wie z.B. Octamethylcyclotetrasiloxan, Polydimethylsiloxane, aber auch pflanzliche Öle wie Rapsöl, Sonnenblumenöl oder Olivenöl. Weiterhin geeignet sind organische oder anorganische Polymere mit einem zahlenmittleren Molekulargewicht von < 10000 g/mol. Bevorzugte hydrophobe Zusätze sind Polyorganosiloxane, sowie D3-, D4- und D5-Zyklen und Hexadekan. Besonders bevorzugt sind Polyorganosiloxane und Hexadekan.

Die Initiierung der Polymerisation erfolgt abhängig von der Art der Heterophasenpolymerisation mittels der üblichen, dem Fachmann geläufigen Initiatorsystemen, wie sie beispielsweise im "Handbook of Free Radical Initiators" von E.T. Denisov, T.G. Denisova and T.S. Pokidova, Wiley-Verlag, 2003 beschrieben sind.

Beispiele für wasserlösliche Initiatoren für die Emulsions- oder Miniemulsionspolymerisation sind die Natrium-, Kalium- und Ammoniumsalze der Peroxodischwefelsäure, Wasserstoffperoxid, t-Butylhydroperoxid, Kaliumperoxodiphosphat, 4,4'-Azobis(4-cyanovaleriansäure).

Beispiele für überwiegend öllösliche Initiatoren für die Suspensions- oder Mikrosuspensionspolymerisation sind t-Butylperoxid, Cumolhydroperoxid, Dilauroylperoxid, t-Butylperoxybenzoat, Isopropylbenzolmonohydroperoxid, Dibenzoylperoxid oder Azobisisobutyronitril, t-Butylperoxopivalat,

Bevorzugte Starter für Miniemulsionspolymerisationen sind Kaliumpersulfat, Ammoniumpersulfat, Azobisisobutyronitril sowie Dibenzoylperoxid.

Die genannten Initiatoren werden vorzugsweise in Mengen von 0,01 bis 4,0 Gew-%, bezogen auf das Gesamtgewicht der Monomeren, eingesetzt.

Die Initiatoren können auch in Kombination mit einem Reduktionsmittel verwendet werden. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt vorzugsweise 0,15 bis 3 Gew.-% der eingesetzten Monomermenge. Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Ein besonders bevorzugtes Initiator-System aus den vorangenannten Komponenten ist das System t-Butylhydroperoxid/-Natriumhydroxymethansulfinat/Fe (EDTA) ^{2+/3+}.

Geeignete in der kontinuierlichen Phase lösliche und in der dispergierten Phase unlösliche Additive, welche die Polymerisation der ethylenisch ungesättigten Monomere in der kontinuierlichen Phase abbrechen, sind solche, welche unter Polymerisationsbedingungen in der kontinuierlichen Phase zu mindestens 1 g g/l löslich sind, und in der dispersen Phase zu maximal 0,1 g/l löslich sind. Diese Additive bewirken, dass die Polymerisation im Wesentlichen in der dispersen Phase stattfindet, das heißt in der kontinuierlichen Phase unterbunden wird.

Geeignete Additive sind ethylenisch ungesättigte Verbindungen, welche eine mit den Monomeren der dispersen Phase ungünstige Copolymerisationscharakteristik aufweisen, das heißt die Kreuzpolymerisation mit Monomeren der dispersen Phase nicht zulassen. Geeignet sind beispielsweise Styrylgruppen-tragende polare oder salzartige Verbindungen. Ein Beispiel hierfür ist Natriumstyrylsulfonat bei der Polymerisation von Vinylestern, insbesondere von Vinylacetat. Geeignete Verbindungen lassen sich daher je nach Art der Monomere über die Copolymerisationsparameter ermitteln. Die Copolymerisationsparameter lassen sich experimentell bestimmen oder im Polymer Handbook 2nd Edition; J. Wiley & Sons, New York (1975) nachschlagen.

Die Reaktionstemperaturen liegen zwischen 0°C und 200°C, bevorzugt zwischen 5°C und 80°C, besonders bevorzugt zwischen 30°C und 70°C. Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

In einer bevorzugten Ausführungsform wird das erfindungsgemäße Additiv vor Beginn der Polymerisation wenigstens teilweise in der kontinuierlichen Phase gelöst.

Die Reaktion kann in einem offenen System oder in einem geschlossenen System erfolgen. Bevorzugt wird eine Reaktion bei Normaldruck in einem offenen System, die Reaktion kann jedoch auch in Abhängigkeit von den eingesetzten Monomeren in dem Fachmann geläufiger Art bei Drücken von bis zu 150 bar. Weiterhin ist eine Reaktion unter Druck- und Temperaturbedingungen möglich, in der das kontinuierliche Medium im überkritischem Zustand vorliegt.

Bevorzugt erfolgt die Heterophasenpolymerisation in Wasser als kontinuierlicher Phase. Die damit erhältlichen Polymerdispersionen können als solche in den dafür typischen Anwendungsgebieten eingesetzt werden oder in Form deren in Wasser redispergierbaren Polymerpulver. Zur Herstellung von redispergierbaren Polymerpulvern werden die wässrigen Dispersionen der nach dem erfindungsgemäßen Verfahren hergestellten Polymerisate in dem Fachmann bekannter Weise getrocknet, vorzugsweise nach dem Sprühtrocknungsverfahren.

Typische Anwendungsgebiete für Polymerisate in Form deren wässrigen Dispersionen und in Wasser redispergierbaren Polymerpulver sind der Einsatz in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner der Einsatz als Bindemittel für Beschichtungsmittel und Klebemittel oder als Beschichtungs- bzw. Bindemittel für Textilien und Papier. Die mit dem erfindungsgemäßen Verfahren zugänglichen Polymerisate können auch als reines über Substraten filmbildendes oder zu Blöcken oder anderen beliebigen Formen aushärtendes Material verwendet werden.

### Beispiele

Im Folgenden wird das erfindungsgemäße Polymerisationsverfahren anhand von Beispielen illustriert. Alle Reaktionen erfolgten unter Stickstoffatmosphäre bei Normaldruck, soweit nicht anders angegeben. Monomere und Initiatoren wurden, soweit nicht anders angegeben, ohne vorherige Reinigungsschritte bzw. Trocknungsschritte eingesetzt.
Als Homogenisierapparatur kam ein Ultraschallhomogenisator der Firma Branson Digital Sonifier 250 mit 200 Watt Maximalleistung zum Einsatz. Teilchengrößenbestimmungen erfolgten über Lichtstreuexperimente an einem Zetasizer Nano-S ZEN 1600 der Firma Malvern Instruments.

Beispiel 1 / Vergleichsbeispiel 1:

### System: Vinylacetat/Wasser Initiator: Kaliumpersulfat

Es wurde eine Emulsion bestehend aus 80 g entionisiertem Wasser, 20 g Vinylacetat, 1 g Styrolsulfonat-Natriumsalz, 2 g Natriumdodecylsulfat und 1 g Hexadekan zubereitet. Diese wurde anschließend über einen Zeitraum von 10 Minuten per Ultraschallkavitation (70% Leistung) homogenisiert. Zur enstandenen Emulsion werden 0,1 g Kaliumpersulfat zugefügt und unter Rühren für eine Dauer von 6 h bei 70 °C polymerisiert (1). In einem weiteren Vergleichsansatz (V1) wurde identisch verfahren, jedoch ohne Zugabe von Styrylsulfonat-Natriumsalz. Beides Mal erhielt man eine Polymerdispersion mit einem Festgehalt von 24 %. Als Teilchengrößen und Teilchenanzahl ergaben sich:

| Beispiel | Teilchen Monomeremulsion | | Teilchen Polymerdispersion | | Verhältnis Teilchenzahl Emulsion/Dispersion |
|---|---|---|---|---|---|
| | Größe [nm] | Zahl [10¹⁷] | Größe [nm] | Zahl [10¹⁷] | |
| 1 | 24 | 29,6 | 291 | 0,013 | 2273 |
| V1 | 134 | 0,1170 | 98 | 0,341 | 0,5 |

Das Beispiel 1 illustriert, dass die Anwesenheit des mit Vinylacetat nicht copolymerisierbaren Styrolsulfonats dazu führt, dass eine Nukleierung und Polymerisation in der Wasserphase vollständig unterdrückt werden. Durch den nach wie vor stattfindenden Transport von Vinylacetat durch die Wasserphase führt dies zu einer rapiden Abnahme der Teilchenzahl. Im Vergleichsbeispiel V1 verdoppelt sich die Teilchenzahl durch Polymerisation und damit verbundene Neunukleierung in der Wasserphase.

### Vergleichsbeispiele 2 und 3:

### System: Styrol/Wasser Initiator: Kaliumpersulfat

Es wurde eine Emulsion bestehend aus 80 g entionisiertem Wasser, 20 g Styrol, 1 g Styrolsulfonat-Natriumsalz, 2 g Natriumdodecylsulfat und 1 g Hexadekan zubereitet. Diese wurde anschließend über einen Zeitraum von 10 Minuten per Ultraschallkavitation (70 % Leistung) homogenisiert. Zur enstandenen Emulsion wurden 0,1 g Kaliumpersulfat zugefügt und unter Rühren für eine Dauer von 6 h bei 70 °C polymerisiert (V2). In einem weiteren Vergleichsansatz (V3) wurde identisch verfahren, jedoch ohne Zugabe von Styrylsulfonat-Natriumsalz. Beides Mal erhielt man eine Polymerdispersion mit einem Festgehalt von 24%. Als Teilchengrößen und Teilchenanzahl ergaben sich

| Beispiel | Teilchen Monomeremulsion | | Teilchen Polymerdispersion | | Verhältnis Teilchenzahl Emulsion/Dispersion |
|---|---|---|---|---|---|
| | Größe [nm] | Zahl [10¹⁷] | Größe [nm] | Zahl [10¹⁷] | |
| V2 | 232 | 0,0337 | 42 | 4,96 | 0,01 |
| V3 | 43 | 5,28 | 61 | 1,62 | 3 |

Das Vergleichsbeispiel V2 illustriert, dass die Anwesenheit des mit Styrol copolymerisierbaren Styrolsulfonats dazu führt, dass vermehrt Nukleierung in der Wasserphase auftritt, wodurch die Zahl der Partikel im Lauf der Polymerisation wächst. In diesem Fall ist Styrolsulfonat kein geeignetes Additiv. Im Vergleich von V2 und V3 wird deutlich, dass die Anwesenheit von Styrolsulfonat sogar vermehrt zur Neunukleierung in der Wasserphase führt.

## Patentansprüche

1. Verfahren zur radikalisch initiierten Heterophasenpolymerisation, wobei die Polymerisation von einem oder mehreren ethylenisch ungesättigten Monomeren in einer, in der kontinuierlichen Phase, dispergierten Phase abläuft, **dadurch gekennzeichnet, dass** vor oder während der Polymerisation ein oder mehrere in der kontinuierlichen Phase lösliche und in der dispergierten Phase unlösliche Additive zugegeben werden, welche die Polymerisation der ethylenisch ungesättigten Monomere in der kontinuierlichen Phase abbrechen,
wobei als Additive solche zugegeben werden aus der Gruppe umfassend Styrylgruppen-tragende polare oder salzartige Verbindungen, welche eine mit den Monomeren der dispersen Phase ungünstige Copolymerisationscharakteristik aufweisen, und
wobei die ethylenisch ungesättigten Monomere ausgewählt werden aus der Gruppe bestehend aus einem oder mehreren Vinylestern von unverzweigten oder verzweigten Alkylcarbonsäuren mit 1 bis 15 C-Atomen; oder Gemischen bestehend aus Vinylacetat und Ethylen; oder Gemischen bestehend aus Vinylacetat, Ethylen und einem Vinylester von α-verzweigten Monocarbonsäuren mit 9 bis 11 C-Atomen; oder Gemischen bestehend aus Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; wobei gegebenenfalls noch Makromere oder 0,1 bis 20 Gew.-% von einem oder mehreren Hilfsmonomeren, bezogen auf das Gesamtgewicht der Monomere, eingesetzt werden können.

2. Verfahren nach Anspruch 1, **dadurch gekennzeichnet, dass** als kontinuierliche Phase Wasser, aliphatische und aromatische Alkohole, oder deren Gemische vorliegen.

3. Verfahren nach Anspruch 1 bis 2, **dadurch gekennzeichnet, dass** die Heterophasenpolymerisation mittels Suspensions-,
Mikrosuspensions-, Emulsions- oder Miniemulsionspolymerisation erfolgt.

4. verfahren nach Anspruch 1 bis 3, **dadurch gekennzeichnet, dass** die Heterophasenpolymerisation mittels Miniemulsionspolymerisation in Wasser erfolgt.

5. Verfahren nach Anspruch 4, **dadurch gekennzeichnet, dass** die Miniemulsionspolymerisation in Gegenwart von hydrophoben, nicht polymerisierbaren Zusätzen erfolgt.

6. Verfahren nach Anspruch 1 bis 5, **dadurch gekennzeichnet, dass** Makromere copolymerisiert werden, mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, wobei mindestens ein a = 1 ist, und n = 5 bis 10000 beträgt.

## Claims

1. Process for free-radically initiated heterophase polymerization, the polymerization of one or more ethylenically unsaturated monomers proceeding in a phase dispersed in the continuous phase, **characterized in that**, before or during the polymerization, one or more additives which are soluble in the continuous phase and insoluble in the dispersed phase are added which terminate the polymerization of the ethylenically unsaturated monomers in the continuous phase, additives added being those from the group encompassing polar or salt-like compounds which carry styryl groups and which have unfavourable copolymerization characteristics with the monomers of the disperse phase, and the ethylenically unsaturated monomers being selected from the group consisting of one or more vinyl esters of unbranched or branched alkylcarboxylic acids having 1 to 15 C atoms; or mixtures consisting of vinyl acetate and ethylene; or mixtures consisting of vinyl acetate, ethylene, and a vinyl ester of α-branched monocarboxylic acids having 9 to 11 C atoms; or mixtures consisting of vinyl acetate and one or more monomers from the group of methyl acrylate, ethyl acrylate, propyl acrylate, n-butyl acrylate, 2-ethylhexyl acrylate, and optionally ethylene; and, if desired, use may also be made of macromers or of 0.1% to 20% by weight of one or more auxiliary monomers, based on the total weight of the monomers.

2. Process according to Claim 1, **characterized in that** water, aliphatic and aromatic alcohols or mixtures thereof are present as continuous phase.

3. Process according to Claim 1 to 2, **characterized in that** the heterophase polymerization takes place by means of suspension, microsuspension, emulsion or miniemulsion polymerization.

4. Process according to Claim 1 to 3, **characterized in that** the heterophase polymerization takes place by means of miniemulsion polymerization in water.

5. Process according to Claim 4, **characterized in that** the miniemulsion polymerization takes place in the presence of hydrophobic, nonpolymerizable additions.

6. Process according to Claim 1 to 5, **characterized in that** macromers are copolymerized, having the general formula R¹ₐR₃₋ₐSiO(SiR₂O)ₙSiR₃₋ₐR¹ₐ, where R is alike or different and is a monovalent, optionally substituted, alkyl radical or alkoxy radical having in each case 1 to 18 C atoms, R¹ is a polymerizable group, a is 0 or 1, and at least one a is 1, and n is 5 to 10 000.

## Revendications

1. Procédé pour la polymérisation hétérophasique à amorçage radicalaire, la polymérisation d'un ou plusieurs monomères à insaturation éthylénique se déroulant dans une phase dispersée, dans la phase continue, **caractérisé en ce qu'**avant ou pendant la polymérisation on ajoute un ou plusieurs additifs solubles dans la phase continue et insolubles dans la phase dispersée, qui interrompent la polymérisation des monomères à insaturation éthylénique dans la phase continue,
en ajoutant comme additifs ceux choisis dans le groupe comprenant des composés polaires ou de type sel, portant des groupes styryle, qui présentent des caractéristiques de copolymérisation défavorables avec les monomères de la phase dispersée, et dans lequel les monomères à insaturation éthylénique sont choisis dans le groupe constitué par un ou plusieurs esters vinyliques d'acides alkylcarboxyliques ramifiés ou non ramifiés ayant de 1 à 15 atomes de carbone ; ou des mélanges constitués d'acétate de vinyle et d'éthylène ; ou des mélanges constitués d'acétate de vinyle, d'éthylène et d'un ester vinylique d'acides monocarboxyliques α-ramifiés ayant de 9 à 11 atomes de carbone ; ou des mélanges constitués d'acétate de vinyle et d'un ou plusieurs monomères choisis dans le groupe constitué par l'acrylate de méthyle, l'acrylate d'éthyle, l'acrylate de propyle, l'acrylate de n-butyle, l'acrylate de 2-éthylhexyle et éventuellement l'éthylène ; dans lequel éventuellement encore des macromères ou 0,1 à 20 % en poids d'un ou plusieurs monomères auxiliaires, par rapport au poids total des monomères, peuvent être utilisés.

2. Procédé selon la revendication 1, **caractérisé en ce que** de l'eau, des alcools aliphatiques et des alcools aromatiques, ou des mélanges de ceux-ci sont présents en tant que phase continue.

3. Procédé selon les revendications 1 et 2, **caractérisé en ce que** la polymérisation hétérophasique s'effectue par polymérisation en suspension, en microsuspension, en émulsion ou en mini-émulsion.

4. Procédé selon les revendications 1 à 3, **caractérisé en ce que** la polymérisation hétérophasique s'effectue par polymérisation en mini-émulsion dans l'eau.

5. Procédé selon la revendication 4, **caractérisé en ce que** la polymérisation en mini-émulsion s'effectue en présence d'additifs hydrophobes non polymérisables.

6. Procédé selon les revendications 1 à 5, **caractérisé en ce qu'**on copolymérise des macromères de formule générale R¹ₐR₃₋ₐSi_{O}(SiR₂O)ₙSiR₃₋ₐR¹ₐ, R étant le même ou différent et représentant un radical alkyle ou un radical alcoxy monovalents, éventuellement substitués, ayant chacun de 1 à 18 atomes de carbone, R¹ représentant un groupe polymérisable, a étant 0 ou 1, au moins un a étant égal à 1, et n valant de 5 à 10 000.
